# EUROPEAN PATENT SPECIFICATION

(11) **EP 2 845 476 B1**
(45) Date of publication and mention of the grant of the patent: **08.03.2017**
(21) Application number: 14182964.8
(22) Date of filing: 29.08.2014
(51) Int. Cl.: B26B 19/38, A01K 14/00, B26B 19/24

(54) **A shearing comb**
Scherkamm
Peigne de cisaillement

(30) Priority: 05.09.2013 GB 201315780
(43) Date of publication of application: 11.03.2015
(73) Proprietor: HEINIGER LIMITED, CH-3360 Herzogenbuchsee (CH)
(72) Inventor: Williams, Selwyn, Halls Head, Western Australia 6210 (AU); Tokar, Ludo, 3412 Heimiswil (CH)
(74) Representative: Uno, Jennifer Elizabeth Hayes

(56) References cited:
- WO-A1-2007/125304
- GB-A- 341 547
- NZ-A- 543 779
- US-A- 2 210 703

## Description

### Field of the Invention

The present invention relates to a shearing comb. More particularly, the shearing comb of the present invention is intended for use with a shearing hand piece and cutter, for shearing sheep or other animals. The features of the shearing comb are such that any buildup of lanolin or other waxy material originating from an animal during shearing is substantially minimised.

### Background

At present, the shearing, crutching and trimming of animal wool and hair is most commonly achieved using either an electric or externally driven shearing hand piece utilising both a comb and cutter to cut hair or wool through which the comb and cutter are pushed. The comb is generally releasably fixed relative to the shearing hand piece whilst the cutter passes over an upper surface of the comb in a reciprocating fashion. Both the cutter and comb are provided with a plurality of teeth that perform the cutting action.

In use, a shearer moves the hand piece through the wool, such that the rear surface of the comb rests on the animal's skin, while the cutter sweeps across the upper surface of the comb, cutting the wool fibres caught between the teeth. However, such an arrangement typically results in the build up of a waxy material, such as lanolin, on a bottom surface of the comb that in operation rests against the animal's skin. The build up of lanolin in this area may hinder the ease of entry and flow of the comb through the wool fibres. As such, the comb requires periodic cleaning to remove any built up lanolin in order to maintain an efficient cutting action. The periodic cleaning of shearing combs is time-consuming and inconvenient, thereby reducing the overall productivity of sheep shearing operations.

US2210703 discloses a sheep shearing comb having grooves in an outer surface.

It is one object of the shearing comb of the present invention to overcome substantially the abovementioned problems of the prior art, or at least provide a useful alternative thereto.

Reference to cited material or information contained in the text should not be understood as a concession that the material or information was part of the common general knowledge or was known in Australia or any other country.

Throughout this specification, unless the context requires otherwise, the word "comprise", or variations such as "comprises" or "comprising", will be understood to imply the inclusion of a stated integer or group of integers but not the exclusion of any other integer or group of integers.

### Summary of the Invention

In accordance with the present invention there is provided a shearing comb as described in the appended claims.

The comb body further comprises a bottom surface and a top surface, such that the bottom surface of the comb body is in contact with an animal's skin during shearing.

The or each channel is disposed on the bottom surface of the comb body.

The teeth are preferably separated by a first groove, defining a gullet and the forward surface of the comb body is defined by the gullets between the teeth.

Preferably, a second groove is provided in the bottom surface between adjacent teeth.

The comb body preferably further comprises a pair of screw receiving recesses that project forwardly from the rear surface.

In one form of the invention, the or each channel extends rearwardly beyond a forwardmost point of the screw receiving recess.

In one form of the invention, the or each channel extends in a straight line between the forward and rear surfaces of the comb body.

The rear surface of the comb body preferably comprises cut-away portions and rear portions.

Preferably, the comb body further comprises a first pair of channels that extend from the forward surface to respective cut away portions of the rear surface, such that the first pair of channels has each channel located at opposing sides of the comb body.

Each channel of the first pair of channels preferably has a width that is substantially identical to the width between an outer tooth and an adjacent inner tooth.

In one form of the invention, the comb body further comprises a second pair of channels.

The second pair of channels is preferably located inwardly from the first pair of channels.

Preferably, the second pair of channels has each channel extending from the forward surface to the respective rear edge portion of the rear surface.

Still preferably, each channel of the second pair of channels is located adjacent to a screw receiving recess.

Each channel of the second pair of channels preferably has a width that is substantially identical to the width between two adjacent inner teeth.

### Brief Description of the Drawings

The shearing comb of the present invention will now be described, by way of example only, with reference to two embodiments thereof and the accompanying drawings, in which:-
Figure 1 is a top plan view of a shearing comb according to the prior art, showing first and second grooves formed therein between adjacent teeth, the first groove forming a gullet between adjacent teeth;
Figure 2 is a cross-sectional view along line AA of the shearing comb of Figure 1;
Figure 3 is a forward view of the shearing comb of Figure 1;
Figure 4 is a rear view of the shearing comb of Figure 1;
Figure 5 is a side view of the shearing comb of Figure 1;
Figure 6 is a perspective view of the shearing comb on Figure 1;
Figure 7 is a top plan view of a shearing comb in accordance with a first embodiment of the present invention;
Figure 8 is a cross-sectional view along line AA of Figure 7;
Figure 9 is a forward view of the shearing comb of Figure 7;
Figure 10 is a rear view of the shearing comb of Figure 7;
Figure 11 is a side view of the shearing comb of Figure 7;
Figure 12 is a perspective view of the shearing comb on Figure 7;
Figure 13 is a top pan view of a shearing comb in accordance with a second embodiment of the present invention;
Figure 14 is a cross-sectional view along line AA of Figure 13;
Figure 15 is a forward view of the shearing comb of Figure 13;
Figure 16 is a rear view of the shearing comb of Figure 13;
Figure 17 is a side view of the shearing comb of Figure 13; and
Figure 18 is a perspective view of the shearing comb on Figure 13.

### Detailed Description of the Invention

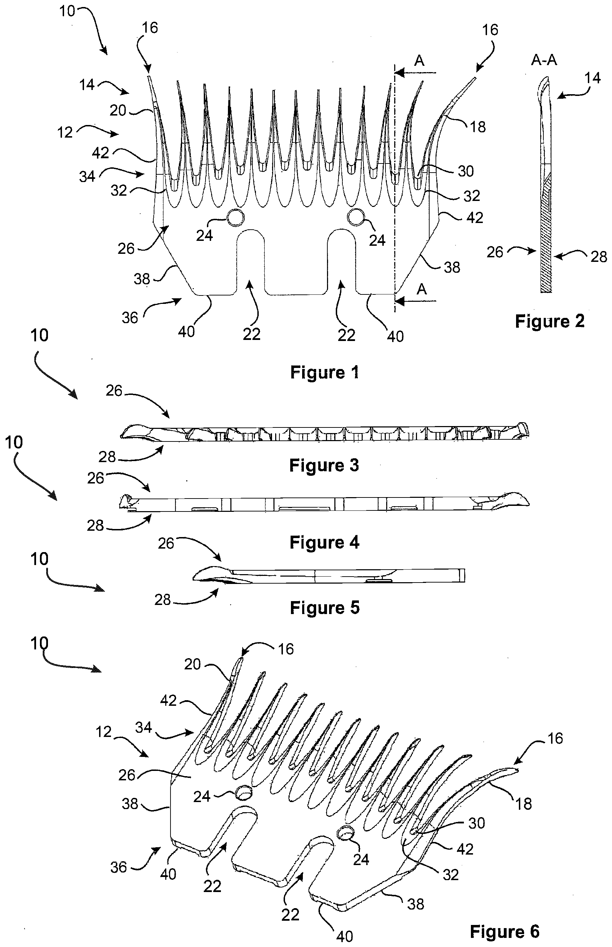

In Figures 1 to 6 there is shown a shearing comb 10 in accordance with the prior art. The shearing comb 10 comprises a comb body 12, a plurality of teeth 14, wherein the plurality of teeth 14 formed integrally with the body 12 and projecting forwardly therefrom. Outer teeth 16 are referred to respectively as a top-rider 18 and a bottom-rider 20. The comb body 12 has a pair of screw receiving recesses 22 provided therein to aid location in known manner on a shearing hand piece (not shown). The screw receiving recesses 22 project forwardly from a rear surface to be described below. In addition, there are provided a pair of positioning and pendulum holes 24 in the comb body 12 to facilitate location and attachment of the shearing comb 10 to a pendulum (not shown) during the grinding or sharpening of the shearing comb 10.

The shearing comb 10 further has a "sheep side" or bottom surface 26 and a "grinding side" or top surface 28, wherein in use the bottom surface 26 is in contact with the animal, for example, a sheep, being shorn. A steep or first groove 30 is formed in the comb body 12 between adjacent teeth 14 and defines a gullet. Furthermore, a second groove 32 is provided in the body comb 12 between adjacent teeth 14.

The comb body 10 further comprises a forward surface 34 and a rear surface 36. The forward surface 34 is defined by the gullets 30 formed between the teeth 14, while the rear surface 36 is defined by the rearmost extent of the comb body 10 and further comprises cut away portions 38 and rear edge portions 40. The shearing comb 10 further comprises generally opposing sides 42.

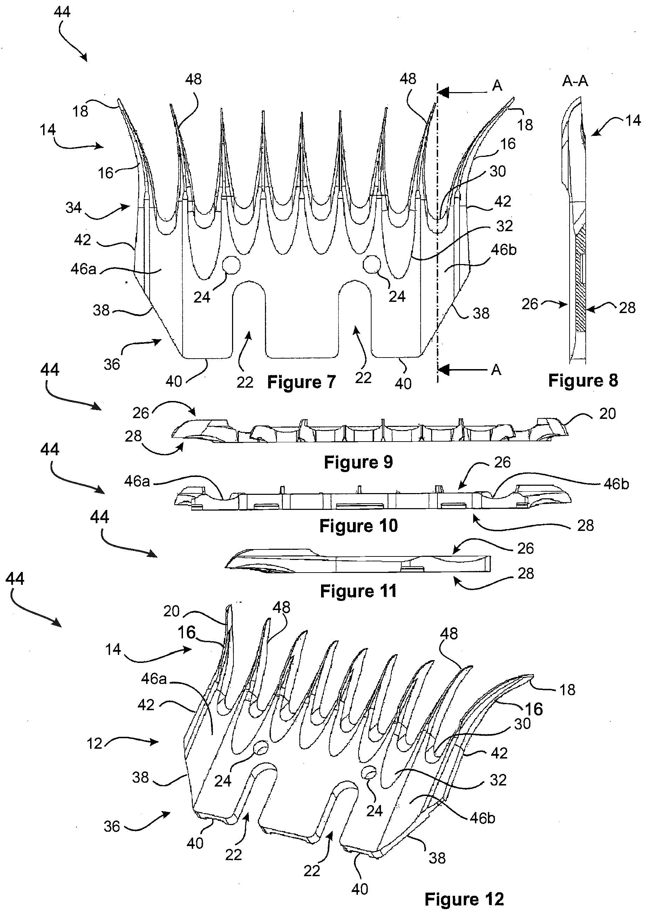

In Figures 7 to 12 there is shown a shearing comb 44 in accordance with one embodiment of the present invention, the shearing comb 44 being in many respects similar to the shearing comb 10, like numerals denoting like parts.

The comb body 12 of the shearing comb 44 unlike that of the shearing comb of the prior art 10, comprises a pair of first channels 46a and 46b, wherein each channel 46a and 46b extends in a straight line from the forward surface 34 to the cut away portions 38 of the rear surface 36. Each channel of the first pair of channels 46a and 44b is located adjacent to a respective opposing side 42 of the comb body 12. Furthermore, the width of each channel of the first pair of channels 46a and 46b generally matches the width between an outer tooth 16 and an adjacent inner tooth 48. The first channels 46a and 46b are to be understood as distinct from, and in addition to, the second grooves 32, as best seen with reference to Figures 7 to 18.

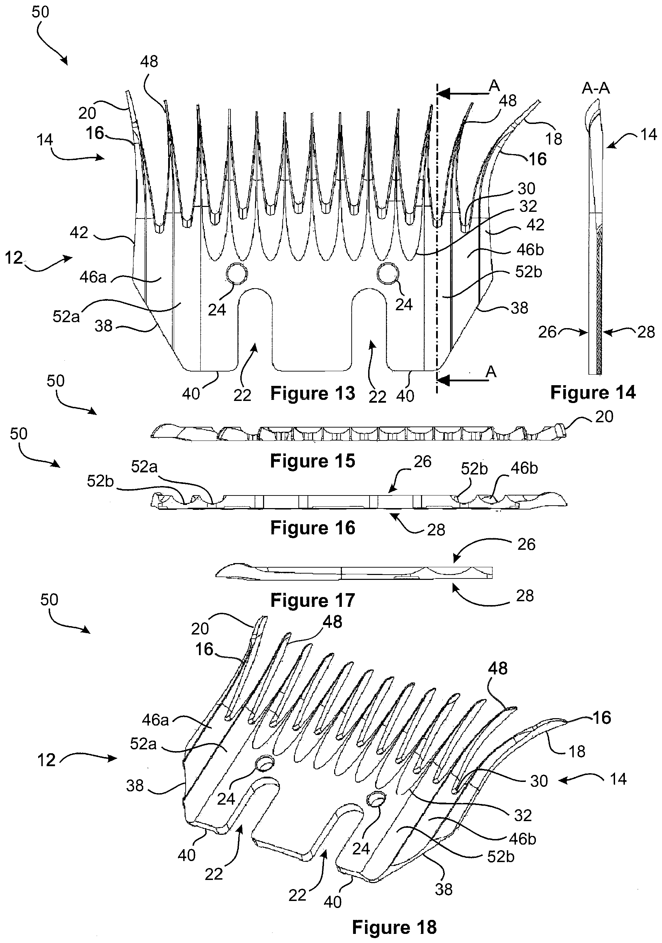

In Figures 13 to 18 there is shown a shearing comb 50 in accordance with a second embodiment of the present invention, the shearing comb 50 being in many respects similar to the shearing comb 10, like numerals denoting like parts.

The bottom surface 26 of the shearing comb 50 further comprises a second pair of channels 52a and 52b, wherein the second pair of channels 52a and 52b is located inwardly from the first pair of channels 46a and 46b. Each channel of the second pair of channels 52a and 52b extends from the forward surface 34 to the rear edge portion 40 of the rear surface 36. Furthermore, each channel of the second pair of channels 52a and 52b is a formed adjacent to a screw slot 22. The second channels 52a and 52b are also to be understood as distinct from, and in addition to, the second grooves 32, again as best seen with reference to Figures 7 to 18.

In use, unlike the shearing comb 10 of the prior art, the shearing comb 44 and shearing comb 50 of the present invention provides at least a first pair of channels 46a and 46b that act to minimise the buildup of lanolin or any other waxy material on the bottom surface 26 of the comb body 12 that is in contact with the skin of the animal when the shearing comb 44 is in use. The shearing comb 50 of the present invention provides a second pair of channels 52a and 52b which further act to minimise the buildup of lanolin on the bottom surface 26 of the comb body 12 when the shearing comb 50 is in use.

The Applicant envisages that the first pair of channels 46a and 46b and the second pair of channels 52a and 52b act to substantially minimise the buildup of material on the bottom surface 16 of the comb body 12, thereby facilitating the ease of movement of the shearing comb 44 over the animal. In addition, the presence of the first pair of channels 46a and 46b further provides the outer teeth 16 with the desired degree of flex and movement at their tip, thereby optimising the entry and flow of the outer teeth 16 through the wool. This is to be contrasted with the prior art comb 10 in which a period of wear is generally required before the desired degree of flex and movement is achieved.

It is envisaged that the above described features of the shearing comb of the present invention may be equally applied to shearing combs having a profile that differs from that shown in the Figures. For example, whilst shearing combs having a concave profile are shown in Figures 7 to 18, it is to be understood that the features of the present invention, including the first pair of channels and optionally the second pair of channels, may also be applied to shearing combs having a convex profile.

It is further envisaged that one or more channels of the shearing comb of the present invention may be provided in a form such that they extend rearwardly beyond a forwardmost point of the screw receiving recess.

It is still further envisaged that the shearing comb of the present invention will be suitable for use with shearing handpieces and cutters available in the art.

Modifications and variations such as would be apparent to a skilled addressee are considered to fall within the scope of the present invention as defined by the appended claims.

## Claims

1. A shearing comb (44, 50) comprising a comb body (12) having forward and rear surfaces (34, 36), and a plurality of spaced apart teeth (48, 16) formed integrally therewith and projecting forwardly from the forward surface, **characterized in that** the comb body further comprises at least one channel (46a, 46b, 52a, 52b) that extends from the forward surface (34) toward the rear surface (36) of the comb body, said at least one channel (46a, 46b, 52a, 52b) being disposed on a bottom surface (26) of the comb body (12) that is in contact with an animal's skin during shearing.

2. A shearing comb according to claim 1, wherein the comb body further comprises a top surface (28), such that the bottom surface of the comb body is in contact with an animal's skin during shearing.

3. A shearing comb according to claim 2, wherein the or each channel is disposed on the bottom surface of the comb body.

4. A shearing comb according to any of the preceding claims, wherein the teeth are separated by a first groove, defining a gullet (30) and the forward surface of the comb body is defined by the gullets between the teeth.

5. A shearing comb according to claim 4, wherein a second groove (32) is provided in the bottom surface between adjacent teeth.

6. A shearing comb according to any of the preceding claims, wherein the comb body further comprises a pair of screw receiving recesses (22) that project forwardly from the rear surface.

7. A shearing comb according to claim 6, wherein the or each channel extends rearwardly beyond a forwardmost point of the screw receiving recesses.

8. A shearing comb according to any of the preceding claims, wherein the or each channel extends in a straight line between the forward and rear surfaces of the comb body.

9. A shearing comb according to any of the preceding claims, wherein the rear surface of the comb body comprises cut-away portions (38) and rear portions (40).

10. A shearing comb according to claim 9, wherein the shearing comb comprises a first pair of channels (46a, 46b) that extend from the forward surface to respective cut away portions of the rear surface, such that the first pair of channels has each channel located at opposing sides of the comb body.

11. A shearing comb according to claims 10 wherein each channel of the first pair of channels has a width that is substantially identical to the width between an outer tooth (18) and an adjacent inner tooth (48).

12. A shearing comb according to claim 10 or 11, wherein the comb body further comprises a second pair of channels (52a, 52b).

13. A shearing comb according to any of claim 12, wherein the second pair of channels is located inwardly from the first pair of channels and has each channel extending from the forward surface to the respective rear edge portion of the rear surface.

14. A shearing comb according to any of claims 12 or 13, when dependent on claim 6, wherein each channel of the second pair of channels is respectively located adjacent to one screw receiving recess of the pair of screws receiving recesses.

15. A shearing comb according to any of claims 12 or 13, wherein each channel of the second pair of channels has a width that is substantially identical to the width between two adjacent inner teeth.

## Patentansprüche

1. Schurkamm (44, 50), umfassend einen Kammkörper (12), der vordere und hintere Oberflächen (34, 36) und eine Vielzahl von voneinander beabstandeten Zinken (48, 16) aufweist, die integral damit gebildet sind und von der vorderen Oberfläche nach vom vorstehen, **dadurch gekennzeichnet, dass** der Kammkörper ferner mindestens einen Kanal (46a, 46b, 52a, 52b) umfasst, der sich von der vorderen Oberfläche (34) zur hinteren Oberfläche (36) des Kammkörpers erstreckt, wobei der mindestens eine Kanal (46a, 46b, 52a, 52b) an einer Unterseite (26) des Kammkörpers (12) angeordnet ist, die während der Schur mit einer Tierhaut in Kontakt ist.

2. Schurkamm nach Anspruch 1, wobei der Kammkörper ferner eine Oberseite (28) umfasst, sodass die Unterseite des Kammkörpers während der Schur mit einer Tierhaut in Kontakt ist.

3. Schurkamm nach Anspruch 2, wobei der oder jeder Kanal an der Unterseite des Kammkörpers angeordnet ist.

4. Schurkamm nach einem der vorangehenden Ansprüche, wobei die Zinken durch eine erste Nut getrennt sind, die eine Rinne (30) definiert, und die vordere Oberfläche des Kammkörpers durch die Rinnen zwischen den Zinken definiert ist.

5. Schurkamm nach Anspruch 4, wobei eine zweite Nut (32) an der Unterseite zwischen benachbarten Zinken bereitgestellt wird.

6. Schurkamm nach einem der vorangehenden Ansprüche, wobei der Kammkörper ferner ein Paar von Schrauben aufnehmenden Aussparungen (22) umfasst, die von der hinteren Oberfläche nach vom vorstehen.

7. Schurkamm nach Anspruch 6, wobei der oder jeder Kanal sich nach hinten über einen vordersten Punkt der Schrauben aufnehmenden Aussparungen erstreckt.

8. Schurkamm nach einem der vorangehenden Ansprüche, wobei der oder jeder Kanal sich in einer geraden Linie zwischen den vorderen und hinteren Oberflächen des Kammkörpers erstreckt.

9. Schurkamm nach einem der vorangehenden Ansprüche, wobei die hintere Oberfläche des Kammkörpers ausgeschnittene Abschnitte (38) und hintere Abschnitte (40) umfasst.

10. Schurkamm nach Anspruch 9, wobei der Schurkamm ein erstes Paar von Kanälen (46a, 46b) umfasst, das sich von der vorderen Oberfläche zu entsprechenden ausgeschnittenen Abschnitten der hinteren Oberfläche erstreckt, sodass das erste Paar von Kanälen jeden Kanal an gegenüberliegenden Seiten des Kammkörpers angeordnet aufweist.

11. Schurkamm nach Anspruch 10, wobei jeder Kanal des ersten Paars von Kanälen eine Breite aufweist, die im Wesentlichen identisch mit der Breite zwischen einem äußeren Zinken (18) und einem benachbarten inneren Zinken (48) ist.

12. Schurkamm nach Anspruch 10 oder 11, wobei der Kammkörper ferner ein zweites Paar von Kanälen (52a, 52b) umfasst.

13. Schurkamm nach Anspruch 12, wobei das zweite Paar von Kanälen nach innen von dem ersten Paar von Kanälen angeordnet ist und jeden Kanal aufweist, der sich von der vorderen Oberfläche zu dem entsprechenden hinteren Kantenabschnitt der hinteren Oberfläche erstreckt.

14. Schurkamm nach einem der Ansprüche 12 oder 13, wenn abhängig von Anspruch 6, wobei jeder Kanal des zweiten Paars von Kanälen jeweils benachbart zu einer Schrauben aufnehmenden Aussparung des Paars von Schrauben aufnehmenden Aussparungen angeordnet ist.

15. Schurkamm nach einem der Ansprüche 12 oder 13, wobei jeder Kanal des zweiten Paars von Kanälen eine Breite aufweist, die im Wesentlichen identisch zu der Breite zwischen zwei benachbarten inneren Zinken ist.

## Revendications

1. Peigne à effiler (44, 50) comprenant un corps de peigne (12) possédant des surfaces antérieure et postérieure (34, 36) et une pluralité de dents espacées l'une de l'autre (48, 16), faisant partie intégrante avec celui-ci et faisant saillie en avant depuis la surface antérieure, **caractérisé en ce que** le corps de peigne comprend en outre
au moins un canal (46a, 46b, 52a, 52b) s'étendant de la surface antérieure (34) vers la surface postérieure (36) du corps de peigne, ledit au moins un canal (46a, 46b, 52a, 52b) étant disposé sur une surface inférieure (26) du corps de peigne (12) qui est au contact de l'épiderme d'un animal au cours de la tonte.

2. Peigne à effiler selon la revendication 1, le corps de peigne comprenant en outre une surface supérieure (28) de sorte que la surface inférieure du corps de peigne soit au contact de l'épiderme d'un animal au cours de la tonte.

3. Peigne à effiler selon la revendication 2, le ou chaque canal étant disposé sur la surface inférieure du corps de peigne.

4. Peigne à effiler selon une quelconque des revendications précédentes, les dents étant séparées par une première cannelure, définissant une gorge (30), et la surface antérieure du corps de peigne étant définie par les gorges entre les dents.

5. Peigne à effiler selon la revendication 4, une deuxième cannelure (32) étant pratiquée dans la surface inférieure entre des dents adjacentes.

6. Peigne à effiler selon une quelconque des revendications précédentes, le corps de peigne comprenant en outre une paire d'évidements de réception de vis (22) faisant saillie vers l'avant depuis la surface postérieure.

7. Peigne à effiler selon la revendication 6, le ou chaque canal s'étendant vers l'arrière au-delà d'un point le plus en avant des d'évidements de réception de vis.

8. Peigne à effiler selon une quelconque des revendications précédentes, le ou chaque canal s'étendant en ligne droite entre les surfaces antérieure et postérieure du corps de peigne.

9. Peigne à effiler selon une quelconque des revendications précédentes, la surface postérieure du corps de peigne comprenant des parties évidées (38) et des parties postérieures (40).

10. Peigne à effiler selon la revendication 9, le peigne à effiler comprenant une première paire de canaux (46a, 46b) s'étendant de la surface antérieure à des parties évidées respectives de la surface postérieure, de sorte que dans la première paire de canaux chaque canal est situé de côtés opposés du corps de peigne.

11. Peigne à effiler selon la revendication 10, la largeur de chaque canal de la première paire de canaux étant substantiellement identique à la largeur entre une dent extérieure (18) et une dent intérieure adjacente (48).

12. Peigne à effiler selon la revendication 10 ou 11, le corps de peigne comprenant en outre une deuxième paire de canaux (52a, 52b).

13. Peigne à effiler selon la revendication 12, la deuxième paire de canaux étant située à l'intérieur depuis la première paire de canaux, et chaque canal s'étendant de la surface antérieure à la partie du bord postérieur respectif de la surface postérieure.

14. Peigne à effiler selon une quelconque des revendications 12 ou 13, dans lequel, en fonction de la revendication 6, chaque canal de la deuxième paire de canaux est située respectivement dans une position adjacente à un évidement de réception de vis de la paire d'évidements de réception de vis.

15. Peigne à effiler selon une quelconque des revendications 12 ou 13, dans lequel la largeur de chaque canal de la deuxième paire de canaux est substantiellement identique à la largeur entre deux dents internes adjacentes.
